# EUROPÄISCHE PATENTSCHRIFT

(11) **EP 1 963 152 B1**
(45) Veröffentlichungstag und Bekanntmachung des Hinweises auf die Patenterteilung: **28.07.2010**
(21) Anmeldenummer: 06819014.9
(22) Anmeldetag: 08.12.2006
(51) Int. Cl.: B60T 8/32, B60T 13/72

(54) **BREMSKRAFTERZEUGUNGSEINRICHTUNG FÜR EINE HYDRAULISCHE FAHRZEUGBREMSANLAGE, FAHRZEUGBREMSANLAGE UND VERFAHREN ZUM BETREIBEN EINER BREMSKRAFTERZEUGUNGSEINRICHTUNG**
BRAKE-FORCE GENERATING DEVICE FOR A HYDRAULIC VEHICLE BRAKE SYSTEM, VEHICLE BRAKE SYSTEM AND METHOD FOR OPERATING A BRAKE-FORCE GENERATING DEVICE
DISPOSITIF GÉNÉRATEUR DE FORCE DE FREINAGE POUR SYSTÈME DE FREINAGE HYDRAULIQUE DE VÉHICULE, SYSTÈME DE FREINAGE DE VÉHICULE ET PROCÉDÉ PERMETTANT DE FAIRE FONCTIONNER UN DISPOSITIF GÉNÉRATEUR DE FORCE DE FREINAGE

(30) Priorität: 22.12.2005 DE 102005061598
(43) Veröffentlichungstag der Anmeldung: 03.09.2008
(73) Patentinhaber: Lucas Automotive GmbH, 56070 Koblenz (DE)
(72) Erfinder: SCHLÜTER, Peter, 56206 Kammerforst (DE)
(74) Vertreter: Thum, Bernhard
(86) Internationale Anmeldenummer: PCT/EP2006/011844
(87) Internationale Veröffentlichungsnummer: WO 2007/079864

(56) Entgegenhaltungen:
- WO-A-2005/014351
- DE-A1- 19 750 977
- DE-C2- 19 802 847

## Beschreibung

Die vorliegende Erfindung betrifft eine Bremskrafterzeugungseinrichtung für eine hydraulische Fahrzeugbremsanlage nach dem Oberbegriff von Anspruch 1 mit einem entlang einer Längsachse verlagerbaren Krafteingangsglied, das mit einem Bremspedal koppelbar oder gekoppelt ist, einer Kammeranordnung, bei der eine Arbeitskammer von einer Vakuumkammer über eine bewegliche Wand getrennt ist, einer Steuerventileinrichtung mit einem Steuerventilgehäuse, wobei die Steuerventileinrichtung einen ersten Dichtsitz zum wahlweisen Verbinden der Vakuumkammer mit der Arbeitskammer und einen zweiten Dichtsitz zum wahlweisen Verbinden der Arbeitskammer mit der Atmosphäre aufweist, einer in dem Steuerventilgehäuse schwimmend gelagerten elektrisch ansteuerbaren Betätigungseinrichtung zum Betätigen der Steuerventileinrichtung und einer Hauptbremszylinderanordnung zum Erzeugen eines hydraulischen Bremsdrucks, wobei der erste Dichtsitz auf der einen Seite der Betätigungseinrichtung angeordnet ist und wobei der zweite Dichtsitz bezüglich der Längsachse auf der entgegengesetzten Seite der Betätigungseinrichtung angeordnet ist und wobei das Krafteingangsglied in einer Normalbetriebssituation, d.h. bei voller Funktionsfähigkeit der Bremskrafterzeugungseinrichtung, mechanisch von der durch die Betätigungseinrichtung betätigten Steuerventileinrichtung entkoppelt ist.

Derartige Bremskrafterzeugungseinrichtungen sind aus dem Stand der Technik bekannt. So zeigt beispielsweise das Dokument DE 198 02 847 C2 der Anmelderin einen pneumatischen Bremskraftverstärker der eingangs bezeichneten Art. Auch bei diesem Bremskraftverstärker ist eine nach Maßgabe der Betätigung des Krafteingangsglieds ansteuerbare Betätigungseinrichtung vorgesehen, insbesondere eine magnetische Spulen-Anker-Anordnung. In Folge einer Verlagerung des Krafteingangsglieds wird bei diesem Stand der Technik die Magnetspule angesteuert, woraufhin eine mit einem Magnetanker gekoppelte Betätigungshülse zum Öffnen und Schließen der Steuerventileinrichtung verlagert wird.

Es hat sich jedoch gezeigt, dass bei dieser Anordnung grundsätzlich jede Betätigung des Bremspedals, die eine Verlagerung des Krafteingangsglied nach sich zieht, unmittelbar iri eine Betätigung der Steuerventileinrichtung umgesetzt wird. Dies liegt insbesondere an der direkten mechanischen Kopplung von Krafteingangsglied und Ventilsitz. Mit anderen Worten beeinflusst der Fahrer durch seine Betätigungsaktion am Bremspedal in jedem Fall unter Nutzung der Bremskraftverstärkung den hydraulischen Druck an den Radbremsen. Solange das Eingreifen des Fahrers die Bremssituation unterstützt, ist dies unproblematisch. Sobald der Fahrer aber bezogen auf die tatsächliche Bremssituation falsch reagiert, indem er beispielsweise zuviel oder zuwenig Bremsdruck einsteuert, kann das Bremsverhalten, insbesondere der Bremsweg sowie die Spurtreue, des Fahrzeugs verschlechtert werden, was im schlimmsten Fall zu einem Unfall führen kann.

Moderne Fahrzeugregelsysteme (ABS, ESP, TC etc.) sind heutzutage in der Lage, die optimale notwendige Bremsleistung innerhalb der physikalischen Grenzen anhand des momentanen Fahrzustands des Fahrzeugs zu ermitteln und somit eine Bremsung zu optimieren. Voraussetzung hierfür ist allerdings, dass die oben erwähnte direkte Einflussnahme des Fahrers auf den Bremsdruck dann verhindert wird. Ferner wird es inzwischen auch als unkomfortabel angesehen, dass der Fahrer am Bremspedal die Wirkung des Fahrzeugregelsystem spürt, wie beispielsweise bei Aktivierung eines Antiblockiersystems eine wiederholtes Rütteln am Bremspedal.

Es ist Aufgabe der vorliegenden Erfindung, eine Bremskrafterzeugungseinrichtung der eingangs bezeichneten Art bereitzustellen, die eine komfortable Bedienung in einer Normalbetriebssituation ermöglicht und die in einer Notbetriebssituation eine hinreichende Bremskrafterzeugung gewährleistet.

Diese Aufgabe wird durch eine Bremskrafterzeugungseinrichtung gemäß dem Patentanspruch 1 gelöst. Dabei ist vorgesehen, dass in einer Notbetriebssituation, d.h. bei einem Ausfall der Betätigungseinrichtung, das Krafteingangsglied in Folge seiner Verlagerung in Richtung der Längsachse zur Betätigung der Steuerventileinrichtung mechanisch mit dieser koppelbar ist.

Erfindungsgemäß kann also in einer Normalbetriebssituation das Krafteingangsglied vollkommen von der übrigen Bremskrafterzeugungseinrichtung mechanisch entkoppelt werden, so dass der Fahrer Abläufe zur Erzeugung einer Bremskraft in der Bremskrafterzeugungseinrichtung nicht direkt am Bremspedal spürt. Ferner führen auf eine Bremspedalbetätigung zurückgehende Verlagerungen des Krafteingangsglieds nicht unmittelbar und zwingend zu einer korrespondierenden Bremskrafterzeugung. Vielmehr können auch elektronische Kontrollsysteme, die den Bremsvorgang überwachen, in Abhängigkeit von weiteren Parametern, wie beispielsweise die Beschaffenheit der Fahrbahnoberfläche oder dergleichen, trotz einer sehr intensiven Bremspedalbetätigung entkoppelt von dem Bremspedal nur eine moderate Bremskrafterzeugung induzieren, beispielsweise gerade so, wie es innerhalb der physikalischen und fahrdynamischen Grenzen des gegenwärtigen Betriebszustands sinnvoll ist.

Sollten jedoch in einer Notbetriebssituation einzelne Komponenten der Bremsanlage ausfallen, beispielsweise die elektronische Steuereinrichtung zur Ansteuerung der Bremskrafterzeugungseinrichtung, so ist es weiterhin möglich, dass in einer solchen Notbetriebssituation durch unmittelbare Nutzung der vom Fahrer am Bremspedal aufgebrachten Bremskraft eine hinreichend große Bremswirkung erzielt wird. Die vorliegende Bremskrafterzeugungseinrichtung sieht also eine Art Rückfallebene für den Fall der vorstehend geschilderten Notbetriebssituation vor.

Darüber hinaus ist festzustellen, dass die erfindungsgemäße Bremskrafterzeugungseinrichtung aufgrund ihrer Bauform mit beidseits der Betätigungseinrichtung angeordneten Dichtsitzen ausgesprochen kompakt gestaltet werden kann. Dies gilt insbesondere für den Bauraum in radialer Richtung. Anders als bei herkömmlichen Bremskrafterzeugungseinrichtungen, bei denen die beiden Dichtsitze bezüglich der Längsachse in radialer Richtung aufeinanderfolgend angeordnet sind und somit einen "schalenartigen" Aufbau besitzen, können mit der Erfindung die beiden Dichtsitze in Richtung der Längsachse betrachtet an unterschiedlichen Stellen der Bremskrafterzeugungseinrichtung angeordnet werden, was radialen Bauraum einspart. Der erforderliche Bauraum in Richtung der Längsachse nimmt hingegen nur in unwesentlichem Maße zu.

Eine Weiterbildung der Erfindung sieht vor, dass das Steuerventilgehäuse mit der beweglichen Wand gekoppelt ist. Ferner kann in vorteilhafter Weise ein Schaltkolben vorgesehen sein, der mit dem Krafteingangsglied über einen Anschlag in der Notbetriebssituation koppelbar ist, wobei der Schaltkolben bei Kopplung an das Krafteingangsglied zur mechanischen Betätigung der Steuerventileinrichtung ausgebildet ist. Dabei kann der Schaltkolben durch eine Kolbenrückstellfeder relativ zu dem Steuerventilgehäuse in einer Ausgangsstellung vorgespannt sein. Der Schaltkolben kann so angeordnet sein, dass er sich in einem unbetätigten Zustand der Bremskrafterzeugungseinrichtung in einem definierten Abstand s von dem Anschlag entfernt befindet. Vorteilhafterweise ist der Abstand s dabei größer bemessen als der Weg, den das Krafteingangsglied relativ zu dem Steuerventilgehäuse in einer Normalbetriebssituation zurücklegt.

In einer Notbetriebssituation, wenn zum Beispiel die Fahrzeugelektronik zum Ansteuern der Bremskrafterzeugungseinrichtung ausgefallen ist, wird bei einer hinreichend starken Pedalbetätigung vorteilhaft das Krafteingangsglied relativ zu dem Steuerventilgehäuse verlagert, so dass es den Abstand s überwindet. Schließlich greift der Anschlag an dem Schaltkolben so an, dass er die Steuerventileinrichtung mechanisch betätigt.

Dadurch dass in einer Normalbetriebssituation der Abstand s zwischen Anschlag und Schaltkolben nicht überwunden wird, wird gewährleistet, dass die durch eine Bremspedalbetätigung des Fahrers verursachte Verlagerung des Krafteingangsglieds keine unmittelbare Auswirkung auf die Bremskrafterzeugung durch die Bremskrafterzeugungseinrichtung hat, da eine mechanische Kopplung zwischen dem Krafteingangsglied und der Steuerventileinrichtung unterbunden wird. In einer Notbetriebssituation hingegen findet eine derartige mechanische Kopplung nach Durchlaufen des Abstandes s statt und eine Bremsung mit hinreichender Bremskraft wird ermöglicht.

Gemäß einer weiteren Ausführungsform sieht die Erfindung vor, dass die Betätigungseinrichtung ein in dem Steuerventilgehäuse verlagerbares erstes Betätigungselement und ein zweites Betätigungselement aufweist, wobei das zweite Betätigungselement relativ zu dem ersten Betätigungselement verlagerbar ist. Dies ermöglicht eine kompakte Bauweise der Anordnung, was nachfolgend noch deutlicher beschrieben werden wird.

So kann zum Beispiel das erste Betätigungselement eine Magnetspule umfassen und das zweite Betätigungselement einen Magnetanker, wobei Magnetspule und Magnetanker jeweils einem anderen Dichtsitz zugeordnet sind. Vorteilhaft wird dabei die Magnetspule mit einem schwimmend im Steuerventilgehäuse gelagerten Magnetspulengehäuse gekoppelt und der Magnetanker mit einer Betätigungshülse verbunden. Wie vorstehend bereits erwähnt, sind Magnetanker und Magnetspule gegeneinander verlagerbar. Somit kann ein einziges Magnetspulen-Magnetanker-Paar zum Öffnen und Schließen zweier Dichtsitze verwendet werden, was im Vergleich zum üblichen Verwenden jeweils eines Magnetspulen-Magnetanker-Paares pro Dichtsitz einen geringeren Platzbedarf mit sich bringt.

Vorzugsweise wird das Magnetspulengehäuse als Betätigungselement für den ersten Dichtsitz ausgebildet, während die Betätigungshülse als Betätigungselement für den zweiten Dichtsitz ausgebildet ist.

Um dem Fahrer trotz der mechanischen Entkopplung des Krafteingangsglieds von der Steuerventileinrichtung und damit der Bremskrafterzeugung in einer Normalbetriebssituation ein gewohntes "Pedalgefühl" vermitteln zu können, kann das Krafteingangsglied an eine Pedalgegenkraftsimulationseinrichtung ankoppelbar sein, wie sie in modernen Fahrzeugen häufig Verwendung findet. Diese kann rein mechanisch, beispielsweise durch Komprimierung einer Federanordnung oder/und hydraulisch bzw. pneumatisch funktionieren.

In einer weiteren Ausführungsform der Erfindung ist dem ersten Dichtsitz ein erstes Ventilelement zugeordnet, und dem zweiten Dichtsitz ein zweites Ventilelement. Diese werden jeweils durch eine Rückstellfeder in Richtung der Betätigungseinrichtung vorgespannt. Vorteilhafterweise ist dabei die Federkraft der dem ersten Dichtsitz zugeordneten Rückstellfeder so bemessen, dass sie kleiner ist als die Federkraft der dem zweiten Dichtsitz zugeordneten Rückstellfeder. Dies ermöglicht eine einfache und kompakte Gestaltung der Bremskrafterzeugungseinrichtung bei gleichzeitig zuverlässigen Ablauf der im Folgenden geschilderten Betriebsphasen.

In einer weiteren Ausführungsform der Erfindung ist vorgesehen, dass das Krafteingangsglied auf herkömmliche Weise mit einem Übertragungskolben gekoppelt ist.

In Ruhestellung der erfindungsgemäßen Bremskrafterzeugungseinrichtung sind die Arbeitskammer und die Vakuumkammer miteinander fluidisch verbunden und es wird keine Bremskraft auf den Hauptbremszylinder ausgeübt. Wenn in einer Normalbetriebssituation nun der Fahrer durch Betätigung des Bremspedals das Krafteingangsglied verlagert, wird nach Maßgabe dieser Verlagerung die Betätigungseinrichtung elektrisch angesteuert. Dabei wird zuerst das dem zweiten Dichtsitz zugeordnete Betätigungselement solange in Richtung des zweiten

Dichtsitzes bewegt, bis es zu einer Wechselwirkung zwischen dem zweiten Dichtsitz und dem zugehörigen Betätigungselement kommt und die Federkraft der zugeordneten Rückstellfeder eine weitere Bewegung des Betätigungselements verhindert. Bei fortdauernder elektrischer Ansteuerung wird eine Kraft auf das dem ersten Dichtsitz zugeordnete Betätigungselement ausgeübt, das sich aufgrund dieser Kraft solange in Richtung des ersten Dichtsitzes bewegt, bis dieser geschlossen und die Verbindung zwischen Arbeitskammer und Vakuumkammer getrennt ist. Eine weitere Bewegung des dem ersten Dichtsitz zugeordneten Betätigungselements in Richtung des ersten Dichtsitzes ist nicht möglich, so dass nun eine Reaktionskraft erzeugt wird, die auf das dem zweiten Dichtsitz zugeordnete Betätigungselement in Richtung des zweiten Dichtsitzes wirkt. Dieses Betätigungselement verlagert sich in Folge der Reaktionskraft, so dass der zweite Dichtsitz geöffnet wird, wodurch eine Verbindung zwischen der Arbeitskammer und der Atmosphäre oder einer Druckquelle hergestellt wird. Dies erzeugt einen Differenzdruck zwischen der Arbeitskammer und der Vakuumkammer an der beweglichen Wand. Nach Maßgabe dieses Differenzdrucks verlagert sich die bewegliche Wand mit dem Steuerventilgehäuse, wodurch letztendlich eine Bremskraft auf den Hauptbremszylinder erzeugt wird. Wenn der Differenzdruck für die benötigte Bremskraft ausreicht, kann durch elektrische Ansteuerung der Betätigungseinrichtung deren Bestromung verringert werden, so dass sich der zweite Dichtsitz wieder schließt. Es stellt sich ein quasi-stationärer Zustand ein, der für eine Bremskraft sorgt, die der durch die Bremspedalbetätigung oder das Fahrzeugregelsystem vorgegebenen Anforderung entspricht.

In Folge einer Freigabe des Bremspedals bewegt sich das System in seine Ausgangsstellung zurück, wobei die Arbeitskammer und die Vakuumkammer miteinander verbunden werden, so dass es zu einem Druckausgleich kommt.

Sollte in einer Notbetriebssituation, zum Beispiel durch Ausfallen der Steuerelektronik, die Betätigungseinrichtung nicht nach Maßgabe der Verlagerung des Krafteingangsglieds elektrisch ansteuerbar sein, so wird eine mechanische Kopplung des Krafteingangsglieds mit der Steuerventileinrichtung zum Beispiel durch eine Kopplung zwischen einem Anschlag und einem Schaltkolben hergestellt. Durch die fortschreitende Verlagerung des Krafteingangsgliedes relativ zu dem Steuerventilgehäuse nach der Kopplung mit dem Schaltkolben wird dann der erste Dichtsitz geschlossen und bei einer weiteren Verlagerung des Krafteingangsglieds der zweite Dichtsitz geöffnet, so dass sich ebenso eine Druckdifferenz zwischen der

Arbeitskammer und der Vakuumkammer an der beweglichen Wand ausbildet. Durch entsprechende Verlagerung des Steuerventilgehäuses wird eine Bremskraft auf den Hauptbremszylinder übertragen. Beim Freigeben des Bremspedals und bei Rückverlagerung des Krafteingangsglieds in seine Ruhestellung wird der Vorgang in umgekehrter Richtung durchlaufen, wodurch das Erzeugen einer Bremskraft beendet wird.

Die Erfindung betrifft auch eine Bremsanlage für ein Kraftfahrzeug, die eine der oben beschriebenen Ausführungsformen der Bremskrafterzeugungseinrichtung verwendet.

Im Folgenden wird ein Ausführungsbeispiel der Erfindung anhand der beiliegenden Figur beschrieben, wobei diese eine achsenthaltende Schnittansicht einer erfindungsgemäßen Bremskrafterzeugungseinrichtung zeigt.

In der Figur wird eine Bremskrafterzeugungseinrichtung 10 mit einem Bremskrafterzeugungseinrichtungsgehäuse 12 dargestellt, welches durch eine bewegliche Wand 14 in eine Arbeitskammer 16 und eine Vakuumkammer 18 unterteilt ist. Die Vakuumkammer 18 ist mit einer nicht gezeigten Vakuumquelle verbunden. Die Arbeitskammer 16 und die Vakuumkammer 18 sind über eine Steuerventileinrichtung 22 ansteuerbar, wie im Folgenden noch im Detail erläutert werden wird.

Die Bremskrafterzeugungseinrichtung 10 weist weiterhin ein entlang einer Längsachse A verlagerbares Krafteingangsglied 20 auf, das mit einem nicht gezeigten Bremspedal gekoppelt ist. Das Krafteingangsglied 20 ist weiterhin mit einem Übertragungskolben 24 verbunden. Die Bremskrafterzeugungseinrichtung 10 ist ferner mit einem Hauptbremszylinder zur Kraftübertragung verbunden, der in der Figur nicht gezeigt ist.

Die Bremskrafterzeugungseinrichtung 10 weist eine elektromagnetische Betätigungsanordnung 26 auf, die eine Magnetspule 28 und einen Magnetanker 30 umfasst. Die Magnetspule 28 ist mit einem Magnetspulengehäuse 32 gekoppelt. Der Magnetanker 30 ist relativ zu dem Magnetspulengehäuse 32 verlagerbar angeordnet und mit einer Betätigungshülse 34 fest verbunden.

Das Magnetspulengehäuse 32 ist in einem Steuerventilgehäuse 36 der Steuerventileinrichtung 22 schwimmend gelagert, das mit der beweglichen Wand 14 verbunden und in dem Gehäuse 12 der Bremskrafterzeugungseinrichtung 10 verlagerbar ist.

In der Figur links von der Betätigungseinrichtung 26 ist ein erster Steuerventilbereich 38 angeordnet. Dieser umfasst einen Dichtsitz 40 und ein Ventilelement 44, das über eine Rückstellfeder 42 in der Figur nach rechts vorgespannt ist.

Entlang der Längsachse A der Bremskrafterzeugungseinrichtung 10 auf der entgegengesetzten Seite der Betätigungseinrichtung 26 ist ein zweiter Steuerventilbereich 46 angeordnet. Dieser umfasst einen Dichtsitz 48 und ein Ventilelement 52, das über eine Rückstellfeder 50 in der Figur nach links vorgespannt ist.

Die Rückstellfeder 50 ist stärker ausgebildet als die Rückstellfeder 42.

Am Übertragungskolben 24 ist ein schulterartiger Anschlag 54 ausgebildet, der sich in dem in der Figur gezeigten Ruhezustand in einem Abstand s entfernt von einer Anschlagfläche 55 eines Schaltkolbens 56 befindet. Der Schaltkolben 56 wird relativ zu dem Steuerventilgehäuse 36 durch eine Kolbenrückstellfeder 58 vorgespannt und wird durch eine rückwärtige Anschlagstufe 60 gegen die Vorspannung der Kolbenrückstellfeder 58 in der in der Figur gezeigten Stellung zurückgehalten.

Die Bremskrafterzeugungseinrichtung 10 gemäß der Figur umfasst außerdem einige Einlassbohrungen 64, 66 sowie Zwischenkammern 68, 70, die eine fluidische Verbindung zwischen der Arbeitskammer 16 und der Vakuumkammer 18 ermöglichen.

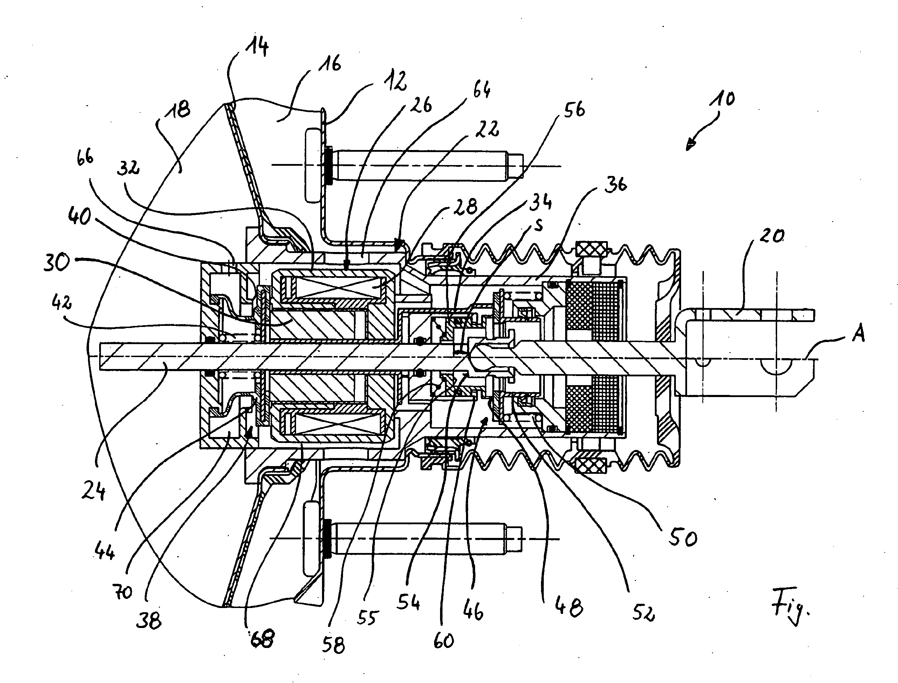

In einer Normalbetriebssituation wird die Bremskrafterzeugungseinrichtung 10 in einer definierten Reihenfolge betätigt. Bei Bestromung der Magnetspule 28 werden Magnetkräfte erzeugt, die den Magnetanker 30 und die damit gekoppelte Betätigungshülse in Richtung des Ventilelements 52, also in Fig.1 nach rechts, bewegen, bis dieser am Ventilelement 52 anschlägt und dort durch die Federkraft der Rückstellfeder 62 vorerst zurückgehalten wird. Da die Rückstellfeder 42 am Ventilelement 44 schwächer ausgebildet ist als die Rückstellfeder 50, wirkt eine Reaktionskraft auf das schwimmend gelagerte Magnetspulengehäuse 32, die dieses nach links bewegt. Das Magnetspulengehäuse 32 greift nun an dem Ventilelement 44 an und bewegt dieses nach links auf den Dichtsitz 40 zu, so dass dieser geschlossen wird. Dadurch wird die Arbeitskammer 16 von der Vakuumkammer 18 getrennt und das Magnetspulengehäuse 32 an einer weiteren Bewegung nach links gehindert.

Bei weiterer Bestromung überwindet der Magnetanker 30 nun auch die Federkraft der Rückstellfeder 50 und verlagert das Ventilelement 52 mittels der Betätigungshülse 34 in der Figur nach rechts. In der Folge öffnet sich der Dichtsitz 48, da der Schaltkolben 56 an der Anschlagstufe 60 zurückgehalten wird. Beim Öffnen des Dichtsitzes 48 wird die Arbeitskammer 16 mit der Atmosphäre verbunden. Dadurch stellt sich ein Differenzdruck an der beweglichen Wand 14 ein, das Steuerventilgehäuse 36 verlagert sich dementsprechend nach links und es wird eine Bremskraft in dem Hauptbremszylinder erzeugt. Durch leichtes Verringern der Bestromung kann der Dichtsitz 52 wieder geschlossen und so der Differenzdruck gehalten werden.

Zum Aufheben der Bremswirkung wird die Bestromung ganz aufgehoben und es spielen sich die vorstehend geschilderten Abläufe in umgekehrter Reihenfolge ab, bis es zu einem vollständigen Druckausgleich an der beweglichen Wand 14 und zu einer Rückkehr der Anordnung in den in der Figur gezeigten Ausgangszustand kommt.

Während einer solchen Normalbetriebssituation wird der Abstand s zwischen dem Anschlag 54 und dem Schaltkolben 56 nicht überwunden und der mit dem Krafteingangsglied 20 verbundene Übertragungskolben 24 gelangt nicht in mechanischen Kontakt mit der Steuerventileinrichtung 36.

In einer Notbetriebssituation, wenn z.B. die Stromversorgung des Fahrzeugs ausfällt, wird die Bremskrafterzeugungseinrichtung 10 unmittelbar durch die Verlagerung des Krafteingangsgliedes 20 betätigt. Dabei wird durch die Verlagerung des Krafteingangsglieds 20 der Abstand s zwischen dem Anschlag 54 und dem Schaltkolben 56 so lange verringert, bis eine mechanische Kopplung des Übertragungskolbens 24 mit dem Schaltkolben 56 und damit der Steuerventileinrichtung 36 erreicht ist. Bei einer weiteren Verlagerung des Krafteingangsglieds 20 wird der Schaltkolben 56 gegen die Federkraft der Kolbenrückstellfeder 58 mitbewegt, wodurch die Rückstellfeder 50 entlastet wird und gegenüber der Rückstellfeder 42 einen Kraftüberschuss aufweist. Dieser Kraftüberschuss führt dazu, dass das Magnetspulengehäuse 32 nach links verschoben wird und den Dichtsitz 40 schließt. Wenn das Krafteingangsglied 20 nun weiter bewegt wird, öffnet der mitgeführte Schaltkolben 56 den Dichtsitz 40 und verbindet somit die Arbeitskammer 16 mit der Atmosphäre. Dadurch wird wie oben beschreiben ein Differenzdruck an der beweglichen Wand 14 erzeugt, der schließlich zu einer Bremskrafterzeugung über den Hauptbremszylinder führt.

Durch die Erfindung ist es möglich, bei einer kompakt herstellbaren Bremskrafterzeugungseinrichtung 10 mit beidseits der Betätigungseinrichtung 26 angeordneten Steuerventilbereichen 38 und 46 mit jeweiligen Dichtsitzen 40 und 48 auch eine mechanische Entkopplung von Krafteingangsglied und Steuerventileinrichtung 22 zu erreichen.

## Patentansprüche

1. Bremskrafterzeugungseinrichtung (10) für eine hydraulische Fahrzeugbremsanlage mit
- einem entlang einer Längsachse (A) verlagerbaren Krafteingangsglied (20), das mit einem Bremspedal koppelbar oder gekoppelt ist,
- einer Kammeranordnung, bei der eine Arbeitskammer (16) von einer Vakuumkammer (18) über eine bewegliche Wand (14) getrennt ist,
- einer Steuerventileinrichtung (22) mit einem Steuerventilgehäuse (36), wobei die Steuerventileinrichtung (22) einen ersten Dichtsitz (40) zum wahlweisen Verbinden der Vakuumkammer (18) mit der Arbeitskammer (16) und einen zweiten Dichtsitz (48) zum wahlweisen Verbinden der Arbeitskammer (16) mit der Atmosphäre aufweist,
- einer in dem Steuerventilgehäuse (36) schwimmend gelagerten elektrisch ansteuerbaren Betätigungseinrichtung (26) zum Betätigen der Steuerventileinrichtung (22) und
- einer Hauptbremszylinderanordnung zum Erzeugen eines hydraulischen Bremsdrucks,
wobei der erste Dichtsitz (40) auf der einen Seite der Betätigungseinrichtung (26) angeordnet ist, wobei weiter der zweite Dichtsitz (48) bezüglich der Längsachse (A) auf der entgegengesetzten Seite der Betätigungseinrichtung (26) angeordnet ist,
und wobei das Krafteingangsglied (20) in einer Normalbetriebssituation mechanisch von der durch die Betätigungseinrichtung (26) betätigten Steuerventileinrichtung (22) entkoppelt ist,
**dadurch gekennzeichnet,**
**dass** in einer Notbetriebssituation bei einem Ausfall der Betätigungseinrichtung (26) das Krafteingangsglied (20) in Folge seiner Verlagerung in Richtung der Längsachse (A) zur Betätigung der Steuerventileinrichtung (22) mechanisch mit dieser koppelbar ist.

2. Bremskrafterzeugungseinrichtung (10) nach Anspruch 1, **dadurch gekennzeichnet, dass** das Steuerventilgehäuse (36) mit der beweglichen Wand (14) gekoppelt ist.

3. Bremskrafterzeugungseinrichtung (10) nach Anspruch 1 oder 2, **gekennzeichnet durch** einen Schaltkolben (56), der mit dem Krafteingangsglied (20) über einen Anschlag (54) in der Notbetriebssituation koppelbar ist, wobei der Schaltkolben (56) bei Kopplung an das Krafteingangsglied (20) zur mechanischen Betätigung der Steuerventileinrichtung (22) ausgebildet ist.

4. Bremskrafterzeugungseinrichtung (10) nach Anspruch 3, **dadurch gekennzeichnet, dass** der Schaltkolben (56) durch eine Kolbenrückstellfeder (58) relativ zu dem Steuerventilgehäuse (36) in eine Ausgangsstellung vorgespannt ist.

5. Bremskrafterzeugungseinrichtung (10) nach Anspruch 3 oder 4, **dadurch gekennzeichnet, dass** der Schaltkolben (56) in einem unbetätigten Zustand der Bremskrafterzeugungseinrichtung (10) in einem definierten Abstand s von dem Anschlag (54) angeordnet ist.

6. Bremskrafterzeugungseinrichtung (10) nach Anspruch 5, **dadurch gekennzeichnet, dass** der Abstand s größer bemessen ist, als der in einer Normalbetriebssituation von dem Krafteingangsglied (20) relativ zu dem Steuerventilgehäuse (36) zurückgelegte Weg.

7. Bremskrafterzeugungseinrichtung (10) nach Anspruch 5 oder 6, **dadurch gekennzeichnet, dass** sich das Krafteingangsglied (20) in einer Notbetriebssituation relativ zu dem Steuerventilgehäuse (36) verlagert und nach Überwinden des Abstands s an dem Schaltkolben (56) zur mechanischen Betätigung der Steuerventileinrichtung (22) angreift.

8. Bremskrafterzeugungseinrichtung (10) nach einem der vorangehenden Ansprüche, **dadurch gekennzeichnet,**
**dass** die Betätigungseinrichtung (26) ein in dem Steuerventilgehäuse (36) verlagerbares erstes Betätigungselement und ein relativ zu dem ersten Betätigungselement verlagerbares zweites Betätigungselement aufweist.

9. Bremskrafterzeugungseinrichtung (10) nach Anspruch 8, **dadurch gekennzeichnet, dass** das erste Betätigungselement eine Magnetspule (28) und dass das zweite Betätigungselement einen Magnetanker (30) umfasst, wobei jedes Betätigungselement jeweils einem Dichtsitz (40, 48) zugeordnet ist.

10. Bremskrafterzeugungseinrichtung (10) nach Anspruch 9, **dadurch gekennzeichnet, dass** die Magnetspule (28) mit einem schwimmend im Steuerventilgehäuse (36) gelagerten Magnetspulengehäuse (32) gekoppelt ist.

11. Bremskrafterzeugungseinrichtung (10) nach Anspruch 10, **dadurch gekennzeichnet, dass** das Magnetspulengehäuse (32) als Betätigungselement für den ersten Dichtsitz (40) ausgebildet ist.

12. Bremskrafterzeugungseinrichtung (10) nach einem der Ansprüche 9 bis 11, **dadurch gekennzeichnet, dass** der Magnetanker (30) mit einer Betätigungshülse (34) verbunden ist, wobei die Betätigungshülse (34) als Betätigungselement für den zweiten Dichtsitz (48) ausgebildet ist.

13. Bremskrafterzeugungseinrichtung (10) nach einem der vorangehenden Ansprüche, **dadurch gekennzeichnet, dass** sie ferner eine mit dem Krafteingangsglied (20) koppelbare oder gekoppelte Pedalgegenkraftsimulationseinrichtung umfasst.

14. Bremskrafterzeugungseinrichtung (10) nach einem der vorangehenden Ansprüche, **dadurch gekennzeichnet, dass** dem erste Dichtsitz (40) ein erstes Ventilelement (44) zugeordnet ist und dass dem zweiten Dichtsitz (48) ein zweites Ventilelement (52) zugeordnet ist, wobei jedes Ventilelement (48, 52) jeweils durch eine Rückstellfeder (42, 50) in Richtung der Betätigungseinrichtung (26) vorgespannt ist.

15. Bremskrafterzeugungseinrichtung (10) nach Anspruch 14, **dadurch gekennzeichnet, dass** die Federkraft der dem ersten Dichtsitz (40) zugeordneten Rückstellfeder (42) kleiner ist als die Federkraft der dem zweiten Dichtsitz (48) zugeordneten Rückstellfeder (50).

16. Bremskrafterzeugungseinrichtung (10) nach einem der vorangehenden Ansprüche, **dadurch gekennzeichnet, dass** das Krafteingangsglied (20) mit einem Übertragungskolben (24) gekoppelt ist.

17. Bremsanlage für ein Kraftfahrzeug mit einer Bremskrafterzeugungseinrichtung (10) nach einem der vorangehenden Ansprüche.

18. Verfahren zum Betreiben einer Bremskrafterzeugungseinrichtung (10) nach den Ansprüche 1 bis 16, **dadurch gekennzeichnet,**
**dass** in der Normalbetriebssituation die Betätigungseinrichtung (26) nach Maßgabe der Verlagerung des Krafteingangsglieds (20) unter mechanischer Entkopplung von Krafteingangsglied (20) und Steuerventileinrichtung (22) ansteuerbar ist,
(i) wobei sich die Betätigungshülse (34) relativ zu dem Steuerventilgehäuse (36) verlagert bis sie in Wechselwirkung mit dem zweiten Dichtsitz (48) tritt,
(ii) wobei dann die dem zweiten Ventilelement (52) zugeordnete Rückstellfeder (50) einer weiteren Verlagerung der Betätigungshülse (34) entgegenwirkt,
(iii) wobei dann sich das Magnetspulengehäuse (32) gegen die Rückstellkraft der dem ersten Ventilelement (44) zugeordneten Rückstellfeder (42) relativ zu dem Steuerventilgehäuse (36) bewegt, wodurch der erste Dichtsitz (40) geschlossen und so die Verbindung zwischen Arbeitskammer (16) und Vakuumkammer (18) getrennt wird,
(iv) wobei dann der Magnetanker (30) die Betätigungshülse (34) gegen die Rückstellkraft der dem zweiten Ventilelement (52) zugeordneten Rückstellfeder (50) bewegt und den zweiten Dichtsitz (48) öffnet und so eine Verbindung zwischen der Arbeitskammer (16) und der Atmosphäre herstellt, so dass sich ein Differenzdruck zwischen der Arbeitskammer (16) und der Vakuumkammer (18) an der beweglichen Wand (14) ausbildet, die eine Bremskraft auf den Hauptbremszylinder erzeugt.

19. Verfahren nach Anspruch 18, **dadurch gekennzeichnet,**
**dass** in einer Notbetriebssituation, in welcher die Betätigungseinrichtung (26) nicht nach Maßgabe der Verlagerung des Krafteingangsglieds (20) ansteuerbar ist,
(i) in Folge einer Verlagerung des Krafteingangsglieds (20) der Abstand s durchlaufen wird, so dass sich eine mechanische Kopplung zwischen dem Anschlag (54) und dem Schaltkolben (56) einstellt,
(ii) wobei dann der Schaltkolben (56) gegen die Rückstellkraft der Kolbenrückstellfeder (58) mit dem Krafteingangsglied (20) relativ zu dem Steuerventilgehäuse (36) verlagert wird,
(iii) wobei dann der erste Dichtsitz (40) in Folge einer Entspannung der dem zweiten Ventilelement (52) zugeordneten Rückstellfeder (50) schließt
(iv) wobei dann in Folge einer weiteren Verlagerung des Krafteingangsglieds (20) durch Mitnahme des Schaltkolbens (56) der zweite Dichtsitz (48) geöffnet wird, so dass sich eine Druckdifferenz zwischen der Arbeitskammer (16) und der Vakuumkammer (18) an der beweglichen Wand (14) ausbildet, die eine Bremskraft auf den Hauptbremszylinder erzeugt.

## Claims

1. Brake force generating device (10) for a hydraulic vehicle brake system with
- a force input member (20) which is displaceable along a longitudinal axis (A) and can be or is coupled to a brake pedal,
- a chamber arrangement, in which a working chamber (16) is separated from a vacuum chamber (18) via a movable wall (14),
- a control valve device (22) with a control valve housing (36), the control valve device (22) having a first seal seat (40) for optional connection of the vacuum chamber (18) to the working chamber (16) and a second seal seat (48) for optional connection of the working chamber (16) to the atmosphere,
- an electrically triggerable actuating device (26), positioned as floating in the control valve housing (36) for actuating the control valve device (22) and
- a master brake cylinder arrangement for generating a hydraulic brake pressure,
wherein the first seal seat (40) is arranged on one side of the actuating device (26) and wherein the second seal seat (48) is arranged on the opposite side of the actuating device (26) in respect of the longitudinal axis (A), and wherein in a normal operating situation the force input member (20) is mechanically uncoupled from the control valve device (22) actuated by the actuating device (26),
**characterised in that** in an emergency operating situation, in the event of failure of the actuating device (26) the force input member (20), as a result of its displacement in the direction of the longitudinal axis (A) to actuate the control valve device (22), can be mechanically coupled thereto.

2. Brake force generating device (10) according to claim 1, **characterised in that** the control valve housing (36) is coupled to the movable wall (14).

3. Brake force generating device (10) according to claim 1, **characterised by** a shift piston (56) which can be coupled to the force input member (20) via a stop (54) in the emergency operating situation, the shift piston (56) being designed for mechanical actuation of the control valve device (22) when coupled to the force input member (20).

4. Brake force generating device (10) according to claim 3, **characterised in that** the shift piston (56) is biased into an initial position relative to the control valve housing (36) by a piston restoring spring (58).

5. Brake force generating device (10) according to claim 3 or 4, **characterised in that** in a non-actuated state of the brake force generating device (10) the shift piston (56) is arranged at a defined distance s from the stop (54).

6. Brake force generating device (10) according to claim 5, **characterised in that** the distance s is of larger dimensions than the path covered relative to the control valve housing (36) by the force input member (20) in a normal operating situation.

7. Brake force generating device (10) according to claim 5 or 6, **characterised in that** the force input member (20) is displaced relative to the control valve housing (36) in an emergency operating situation and after surmounting the distance s acts on the shift piston (56) for mechanical actuation of the control valve device (22).

8. Brake force generating device (10) according to one of the preceding claims, **characterised in that** the actuating device (26) has a first actuating element displaceable in the control valve housing (36) and a second actuating element displaceable relative to the first actuating element.

9. Brake force generating device (10) according to claim 8, **characterised in that** the first actuating element comprises a magnetic coil (28) and **in that** the second actuating element comprises a magnetic armature (30), each actuating element being assigned in each case to a seal seat (40, 48).

10. Brake force generating device (10) according to claim 9, **characterised in that** the magnetic coil (28) is coupled to a magnetic coil housing (32) positioned as floating in the control valve housing (36).

11. Brake force generating device (10) according to claim 10, **characterised in that** the magnetic coil housing (32) is designed as an actuating element for the first seal seat (40).

12. Brake force generating device (10) according to one of claims 9 to 11, **characterised in that** the magnetic armature (30) is connected to an actuating sleeve (34), the actuating sleeve (34) being designed as an actuating element for the second seal seat (48).

13. Brake force generating device (10) according to one of the preceding claims, **characterised in that** it further comprises a pedal counterforce simulation device which can be or is coupled to the force input member (20).

14. Brake force generating device (10) according to one of the preceding claims, **characterised in that** a first valve element (44) is assigned to the first seal seat (40) and **in that** a second valve element (52) is assigned to the second seal seat (48), each valve element (48, 52) being biased in the direction of the actuating device (26) in each case by a restoring spring (42, 50).

15. Brake force generating device (10) according to claim 14, **characterised in that** the spring force of the restoring spring (42) assigned to the first seal seat (40) is less than the spring force of the restoring spring (50) assigned to the second seal seat (48).

16. Brake force generating device (10) according to one of the preceding claims, **characterised in that** the force input member (20) is coupled to a transmission piston (24).

17. Brake system for a motor vehicle with a brake force generating device (10) according to one of the preceding claims.

18. Method for operating a brake force generating device (10) according to claims 1 to 16, **characterised in that** in the normal operating situation the actuating device (26) can be triggered according to the displacement of the force input member (20) while the force input member (20) and the control valve device (22) are mechanically uncoupled,
(i) wherein the actuating sleeve (34) is displaced relative to the control valve housing (36) until it enters into interaction with the second seal seat (48),
(ii) wherein restoring spring (50) assigned to the second valve element (52) then counteracts a further displacement of the actuating sleeve (34),
(iii) wherein the magnetic coil housing (32) then moves against the restoring force of restoring spring (42) assigned to the first valve element (44) relative to the control valve housing (36), whereby the first seal seat (40) is closed and the connection between the working chamber (16) and the vacuum chamber (18) therefore disconnected,
(iv) wherein the magnetic armature (30) then moves the actuating sleeve (34) against the restoring force of restoring spring (50) assigned to the second valve element (52) and opens the second seal seat (48), thus producing a connection between the working chamber (16) and the atmosphere, so that a differential pressure forms between the working chamber (16) and the vacuum chamber (18) at the movable wall (14), which generates a brake force on to the master brake cylinder.

19. Method according to claim 18, **characterised in that**
in an emergency operating situation in which the actuating device (26) cannot be triggered according to the displacement of the force input member (20),
(i) as a result of a displacement of the force input member (20) the distance s is passed through, so that a mechanical coupling arises between the stop (54) and the shift piston (56),
(ii) wherein the shift piston (56) is then displaced against the restoring force of the piston restoring spring (58) with the force input member (20) relative to the control valve housing (36),
(iii) wherein the first seal seat (40) then closes as a result of relief of pres sure of restoring spring (50) assigned to the second valve element (52),
(iv) wherein as a result of a further displacement of the force input member (20) the second seal seat (48) is then opened by entraining of the shift piston (56), so that a pressure difference is formed between the working chamber (16) and the vacuum chamber (18) at the movable wall (14), which generates a brake force on to the master brake cylinder.

## Revendications

1. Dispositif générateur de force de freinage (10) pour système de freinage hydraulique de véhicule, comprenant
- un organe d'entrée de force (20) qui peut être accouplé ou est accouplé à une pédale de frein et peut se déplacer le long d'un axe longitudinal (A),
- un ensemble de chambres (16) dans le cadre duquel une chambre de travail (16) est séparée par une paroi mobile (14) de la chambre à vide (18),
- un dispositif à soupape de commande (22) muni d'un boîtier de soupape de commande (36), ledit dispositif à soupape de commande (22) présentant un premier siège d'étanchéité (40) pour relier sélectivement la chambre à vide (18) à la chambre de travail (16) et un second siège d'étanchéité (48) pour relier sélectivement la chambre de travail (16) à l'atmosphère,
- un dispositif d'actionnement (26) installé en montage flottant dans le boîtier de soupape de commande (36) et pouvant être commandé électriquement pour actionner le dispositif à soupape de commande (22) et
- un dispositif à maître-cylindre de frein servant à produire une pression hydraulique,
le premier siège d'étanchéité (40) étant disposé sur un côté du dispositif d'actionnement (26), le deuxième siège d'étanchéité (48) étant par ailleurs disposé sur le côté opposé du dispositif d'actionnement (26) par rapport à l'axe longitudinal (A) et l'organe d'entrée de force (20) étant, en fonctionnement normal, mécaniquement désaccouplé du dispositif à soupape de commande (22) actionné par le dispositif d'actionnement (26),
**caractérisé en ce que**
en fonctionnement de secours, en cas de défaillance du dispositif d'actionnement (26), l'organe d'entrée de force (20) peut, suite à son déplacement en direction de l'axe longitudinal (A), être mécaniquement accouplé au dispositif à soupape de commande (22) en vue de l'actionnement de celui-ci.

2. Dispositif générateur de force de freinage (10) selon la revendication 1, **caractérisé en ce que** le boîtier de soupape de commande (36) est accouplé à la paroi mobile (14).

3. Dispositif générateur de force de freinage (10) selon la revendication 1 ou 2, **caractérisé par** un piston de commande (56) qui, en fonctionnement de secours, peut être accouplé à l'organe d'entrée de force (20) par le biais d'une butée (54), ledit piston de commande (56) étant conçu pour permettre l'actionnement mécanique du dispositif à soupape de commande (22) lorsqu'il est accouplé à l'organe d'entrée de force (20).

4. Dispositif générateur de force de freinage (10) selon la revendication 3, **caractérisé en ce que** le piston de commande (56) est précontraint par un ressort de rappel (58) dans une position initiale par rapport au boîtier de soupape de commande (36).

5. Dispositif générateur de force de freinage (10) selon la revendication 3 ou 4, **caractérisé en ce que** le piston de commande (56) est disposé à une distance déterminée s de la butée (54) lorsque le dispositif générateur de force de freinage (10) n'est pas actionné.

6. Dispositif générateur de force de freinage (10) selon la revendication 5, **caractérisé en ce que** la distance s est dimensionnée pour être supérieure au chemin parcouru en fonctionnement normal par l'organe d'entrée de force (20) par rapport au boîtier de soupape de commande (36).

7. Dispositif générateur de force de freinage (10) selon la revendication 5 ou 6, **caractérisé en ce qu'**en fonctionnement de secours, l'organe d'entrée de force (20) se déplace par rapport au boîtier de soupape de commande (36) et agit sur le piston de commande (56) pour actionner mécaniquement le dispositif à soupape de commande (22), après avoir surmonté la distance s.

8. Dispositif générateur de force de freinage (10) selon l'une des revendications précédentes, **caractérisé en ce que**
le dispositif d'actionnement (26) présente un premier organe d'actionnement déplaçable dans le boîtier de soupape de commande (36) et un deuxième organe d'actionnement déplaçable par rapport au premier organe d'actionnement.

9. Dispositif générateur de force de freinage (10) selon la revendication 8, **caractérisé en ce que** le premier organe d'actionnement comprend un solénoïde (28) et le deuxième organe d'actionnement un induit (30), chacun des organes d'actionnement étant associé à un siège d'étanchéité (40, 48).

10. Dispositif générateur de force de freinage (10) selon la revendication 9, **caractérisé en ce que** le solénoïde (28) est accouplé à un boîtier de solénoïde (32) installé en montage flottant dans le boîtier de soupape de commande (36).

11. Dispositif générateur de force de freinage (10) selon la revendication 10, **caractérisé en ce que** le boîtier de solénoïde (32) est conçu comme un organe d'actionnement pour le premier siège d'étanchéité (40).

12. Dispositif générateur de force de freinage (10) selon l'une des revendications 9 à 11, **caractérisé en ce que** l'induit (30) est relié à une douille d'actionnement (34), ladite douille d'actionnement (34) étant conçue comme un organe d'actionnement pour le deuxième siège d'étanchéité (48).

13. Dispositif générateur de force de freinage (10) selon l'une des revendications précédentes, **caractérisé en ce qu'**il comprend en outre un dispositif de simulation de force antagoniste de pédale pouvant être accouplé ou accouplé à l'organe d'entrée de force (20).

14. Dispositif générateur de force de freinage (10) selon l'une des revendications précédentes, **caractérisé en ce qu'**un premier organe de soupape (44) est associé au premier siège d'étanchéité (40), et un deuxième organe de soupape (52) au deuxième siège d'étanchéité (48), chaque organe de soupape (48, 52) étant respectivement précontraint par un ressort de rappel (42, 50) en direction du dispositif d'actionnement (26).

15. Dispositif générateur de force de freinage (10) selon la revendication 14, **caractérisé en ce que** la force du ressort de rappel (42) associé au premier siège d'étanchéité (40) est inférieure à la force du ressort de rappel (50) associé aux deuxième siège d'étanchéité (48).

16. Dispositif générateur de force de freinage (10) selon l'une des revendications précédentes, **caractérisé en ce que** l'organe d'entrée de force (20) est accouplé à un piston de transmission (24).

17. Système de freinage de véhicule muni d'un dispositif générateur de force de freinage (10) selon l'une des revendications précédentes.

18. Procédé permettant de faire fonctionner un dispositif générateur de force de freinage (10) selon l'une des revendications 1 à 16, **caractérisé en ce qu'**en fonctionnement normal, le dispositif d'actionnement (26) peut être commandé en fonction du déplacement de l'organe d'entrée de force (20) lorsque l'organe d'entrée de force (20) et le dispositif à soupape de commande (22) sont désaccouplés,
(i) la douille d'actionnement (34) se déplaçant par rapport au boîtier de soupape de commande (36) jusqu'à ce qu'elle entre en interaction avec le deuxième siège d'étanchéité (48),
(ii) le ressort de rappel (50) associé au deuxième organe de soupape (52) s'opposant alors à un plus grand déplacement de la douille d'actionnement (34),
(iii) le boîtier de solénoïde (32) se déplaçant alors par rapport au boîtier de soupape de commande (36) contre la force du ressort de rappel (42) associé au premier organe de soupape (44), ce qui entraîne la fermeture du premier siège d'étanchéité (40) et coupe ainsi la liaison entre la chambre de travail (16) et la chambre à vide (18),
(iv) l'induit (30) faisant alors se déplacer la douille d'actionnement (34) contre la force du ressort de rappel (50) associé au deuxième organe de soupape (52) et s'ouvrir le deuxième siège d'étanchéité (48) pour établir ainsi la liaison entre la chambre de travail (16) et l'atmosphère si bien qu'une différence de pression entre la chambre de travail (16) et la chambre à vide (18) apparaît sur la paroi mobile (14), laquelle produit une force de freinage sur le maître-cylindre de frein.

19. Procédé selon la revendication 18, **caractérisé en ce qu'**en fonctionnement de secours, pendant lequel le dispositif d'actionnement (26) ne peut être commandé en fonction du déplacement de l'organe d'entrée de force (20),
(i) la distance s est parcourue suite à un déplacement de l'organe d'entrée de force (20) si bien qu'un accouplement mécanique s'établit entre la butée (54) et le piston de commande (56),
(ii) le piston de commande (56) étant ensuite, conjointement avec l'organe d'entrée de force (20), déplacé contre la force du ressort de rappel de piston (58), par rapport au boîtier de soupape de commande (36),
(iii) le premier siège d'étanchéité (40) se fermant alors suite à une détente du ressort de rappel (50) associé au deuxième organe de soupape (52),
(iv) le deuxième siège d'étanchéité (48) s'ouvrant alors suite à un plus grand déplacement de l'organe d'entrée de force (20) du fait de l'entraînement du piston de commande (56) si bien qu'une différence de pression s'établit entre la chambre de travail (16) et la chambre à vide (18) sur la paroi mobile (14), laquelle produit une force de freinage sur le maître-cylindre de frein.
